# FASCICULE DE BREVET EUROPEEN

(11) **EP 0 598 631 B1**
(45) Date de publication et mention de la délivrance du brevet: **06.05.1999**
(21) Numéro de dépôt: 93400116.5
(22) Date de dépôt: 19.01.1993
(51) Int. Cl.: C04B 35/52, C04B 35/80, C04B 41/52, C04B 41/50

(54) **Pièce en matériau composite carbone-carbone à matrice dopée SiC, résistant à l'oxydation et son procédé de fabrication**
Oxidationsbeständiger Kohlenstoff-Kohlenstoff Verbundstoff mit SiC-dotierter Matrix und dessen Herstellungsverfahren
Oxidation-resistant carbon-carbon composite material with SiC-doped matrix and method of producing said material

(30) Priorité: 20.01.1992 FR 9200540
(43) Date de publication de la demande: 25.05.1994
(73) Titulaire: AEROSPATIALE Société Nationale Industrielle, 75781 Paris Cédex 16 (FR)
(72) Inventeur: Hocquellet, Dominique, F-33160 St Medard en Jalles (FR)
(74) Mandataire: Des Termes, Monique

(56) Documents cités:
- EP-A- 0 121 797
- EP-A- 0 133 315
- EP-A- 0 359 614
- EP-A- 0 427 629
- FR-A- 2 544 661
- FR-A- 2 610 951
- FR-A- 2 626 570
- CHEMICAL ABSTRACTS, vol. 108, no. 24, Juin 1988, Columbus, Ohio, US; abstract no. 209125n, page 291 ;
- PATENT ABSTRACTS OF JAPAN vol. 16, no. 049 (C-908) 7 Février 1992 & JP-A-03 252 358 (KAWASAKI STEEL CORP) 11 Novembre 1991
- MATERIALS RESEARCH BULLETIN., vol.21, no.11, Novembre 1986, OXFORD GB pages 1391 - 1395 I. JAWED ET AL 'OXIDATION PROTECTION IN CARBON-CARBON COMPOSITES.'
- DATABASE WPI Week 8817, Derwent Publications Ltd., London, GB; AN 88-114984 & JP-A-63 060 173 (SUMITOMO ELEC IND KK) 16 Mars 1988
- PATENT ABSTRACTS OF JAPAN vol. 15, no. 436 (C-882) 7 Novembre 1991 & JP-A-31 083 659 (NISSAN MOTOR CO LTD) 9 Aoüt 1991

## Description

La présente invention se rapporte à une pièce mécanique structurale en matériau composite du type carbone-carbone rendue inoxydable à haute température et en particulier jusqu'à 1700°C sans revêtement externe de protection anti-oxydation ainsi que son procédé de fabrication.

Les pièces structurales en matériau composite du type carbone-carbone présentent une tenue thermique haute performance et sont plus particulièrement destinées à être utilisées pour la réalisation des véhicules spatiaux (navettes ou aéronefs) devant résister aux échauffement provoqués par le frottement de l'air lors de leur rentrée à grande vitesse dans l'atmosphère.

Ces véhicules spatiaux sont en particulier ceux dont les missions de rentrée entraînent en des points singuliers plus sollicités que d'autres tels que le nez, les ailerons ou bords d'attaque, des expositions à des conditions sévères et en particulier à des températures allant jusqu'à 1700°C sous des pressions d'air allant jusqu'à 10⁵Pa ou entraînent l'exposition de certaines pièces à des températures variables (de 1000°C à 1700°C).

Toutefois, l'invention s'applique aussi dans d'autres secteurs industriels nécessitant l'utilisation de pièces en matériau réfractaire gardant de bonnes propriétés mécaniques au-dessus de 1100°C en milieu corrosif. Ceci est en particulier le cas des moteurs de turbine à rendement amélioré travaillant à haute température (de 1300°C à 1400°C) et de certains récupérateurs de chaleur industriels.

Les pièces mécaniques en matériaux composites auxquelles s'applique l'invention sont constitués de fibres de renfort en carbone noyées dans une matrice de carbone.

Les fibres peuvent être courtes ou longues, tissées ou bobinées, nattées ou tressées. Elles peuvent être arrangées selon une, deux, trois, quatre ou plus directions.

L'avantage essentiel des matériaux en carbone-carbone est qu'ils gardent leur intégrité mécanique jusqu'a 3000°C, voire plus haut, sous chauffage rapide. Malheureusement, ces matériaux présentent l'inconvénient de s'oxyder de manière importante dès 400°C en présence d'air.

Pour éviter cette oxydation, différents procédés ont été envisagés. La technique de protection anti-oxydation la plus utilisée est basée sur l'emploi d'un revêtement externe, généralement de carbure de silicium. Une telle protection appelée ci-après PAO externe est notamment décrite dans les documents US-A-4 863 773, US-A-4 976 899, FR-A-2 635 773, FR-A-2 654 094.

D'autres revêtements externes des matériaux carbone-carbone ont été envisagés comme un mélange de SiC/Si/Al₂O₃ tel que décrit dans le document EP-A-0 133 315 ou comme un revêtement de nitrure de silicium tel que décrit dans le document EP-A-0 121 797.

Parallèlement à ces revêtements externes, des couches de protection en carbure de silicium entourant chaque fibre de carbone ont été envisagées comme décrit dans les documents EP-A-0 121 797 et US-A-4 976 899.

Afin d'optimiser les propriétés mécaniques des matériaux composites carbone-carbone, on doit optimiser la liaison fibre-matrice de façon qu'elle soit ni forte, ni faible, du fait de la fragilité de la matrice et du fait qu'on ne veut pas que cette fragilité se propage dans les fibres. Pour cette raison, lorsqu'on doit protéger chaque fibre avec du SiC, on doit également réaliser un dépôt de carbone pyrolytique, ce qui augmente en conséquence le coût de fabrication des matériaux carbone-carbone.

Par ailleurs, on a cherché depuis longtemps à rendre inoxydable dans la masse les composites carbonecarbone en incorporant dans leur matrice des charges variées.

A ce sujet, le document US-A-4 795 677 décrit l'introduction, dans la matrice de carbone, de particules de borure de zirconium et de bore qui s'oxydent pour former un verre très fluide, le B₂O₃ qui s'étale à l'intérieur du matériau.

Ce document américain, en plus de la protection à coeur du matériau composite, utilise un revêtement externe de B₂O₃ modifié de façon à en adapter sa viscosité.

La protection du matériau carbone-carbone se fait par gonflement lors de la formation du B₂O₃ et surtout par la formation d'une couche de B₂O₃ qui s'oppose à l'arrivée de l'oxygène.

Du fait qu'à haute température le B₂O₃ est très fluide et se vaporise facilement, des additifs sont nécessaires. Le choix de ces additifs est très délicat car il faut que les proprietés de viscosité et de mouillabilité du verre ne varient pas trop dans le domaine de températures visées.

L'article Mat. Res. Bull., vol. 21, pp. 1391-1395 de 1986, "Oxydation protection in carbon-carbon composites" de I. Jawed et D.C. Nagle décrit la protection contre l'oxydation d'une matrice de carbone en utilisant des précurseurs organo-métalliques pour former in situ du SiC amorphe et du B₄C qui s'oxydent respectivement en SiO₂ et B₂O₃.

Les essais ont été réalisés en four à 1000°C et à 1500°C et les gains en protection contre l'oxydation sont faibles, ce qui conduit les auteurs de cet article à la nécessité de protéger les matériaux composites par une ou plusieurs couches externes de matériau inorganique réfractaire.

L'oxydation du SiC amorphe en SiO₂ conduit selon I. Jawed and D.C. Nagle à un bouchage des fissures inhérentes au matériau empêchant ainsi l'arrivée de l'oxygène sur le carbone. Ce bouchage résulte soit d'un comportement du SiO₂ identique à celui décrit pour B₂O₃ (couche s'opposant à l'arrivée de l'oxygène), soit du gonflement important qui se produit lors de la transformation du SiC en SiO₂.

Le B₂O₃, y compris en mélange avec d'autres oxydes tels que SiO₂ ou ZrO₂, se volatilise au-dessus de 1000°C. Ainsi, la protection qu'il peut apporter disparaît au-dessus de cette température.

L'oxyde de bore peut résulter d'une oxydation du nitrure de bore ou d'un borure métallique. L'emploi de nitrure de bore et de borure métallique est enseigné par le document US-A-4 119 189.

Le document FR-A-2 104 563 décrit la réalisation d'un matériau pyrolytique composite comportant une matrice de graphite pyrolytique et de carbure de silicium imbriqués. Cette matrice est obtenue par dépôt chimique en phase vapeur (DCPV) simultané de SiC et de graphite dans un substrat poreux. La quantité de SiC dans la matrice peut représenter jusqu'à 95% en volume. Cette quantité très élevée de SiC entraîne une fragilisation du matériau composite, le SiC étant beaucoup moins résistant mécaniquement que le carbone.

Par ailleurs, le procédé de dépôt DCPV étant peu infiltrant, on ne peut pas réaliser de matériaux composites épais.

Il est en outre connu des documents US-A-4 976 899 et US-A-4 863 773 d'introduire du SiC dans la matrice de carbone en pyrolysant des résines précurseurs de carbone sur lesquelles des liaisons Si-O ont été greffées.

Cette méthode d'introduction de SiC dans la matrice de carbone, en l'absence de couche externe de SiC sur le matériau composite, ne permet pas d'assurer une protection efficace du matériau contre l'oxydation.

Pour la protection des matériaux carbonecarbone contre l'oxydation, dont la matrice résulte de la pyrolyse d'un brai, l'introduction d'une poudre de ZrC ou de TiC dans le brai d'imprégnation est connu par le document FR-A-2 626 570. Le principe de fonctionnement de ZrC et de TiC est le même que celui de B₄C avec une oxydation partielle des carbures.

Les différentes techniques de protection contre l'oxydation des matériaux composites carbonecarbone décrites ci-dessus, sont soit très complexes donc onéreuses (en particulier, l'emploi d'un revêtement externe en SiC, nécessite du fait des différences de coefficients de dilation thermique l'emploi de matériaux de colmatage des fissures du revêtement de SiC - voir les documents US-A-4 976 899, EP-A-0 121 797 -), soit de protection limitée contre l'oxydation notamment à haute température (voir US-A-4 795 677 ou la publication de I. Jawed).

L'invention a pour objet une pièce mécanique structurale en un nouveau matériau composite carbonecarbone, protégée contre l'oxydation ainsi que son procédé de fabrication permettant de remédier aux différents inconvénients mentionnés ci-dessus. Cette pièce en matériau composite présente une haute tenue mécanique et une résistance à l'oxydation jusqu'à une température de 1700°C, sans utilisation de couche externe de protection, notamment en présence d'un flux gazeux oxydant.

Cette pièce est beaucoup plus simple à réaliser, donc moins coûteuse que celles de l'art antérieur.

Elle présente en outre une diminution par au moins par deux de sa vitesse d'oxydation entre 1000°C et 1700°C, sans revêtement externe, en présence d'un flux massique d'oxygène supérieur à 0,005Kg/m²/s.

En outre son efficacité vis-à-vis de l'oxydation est supérieure à celle des pièces en matériau carbone-carbone de l'art antérieur car, contrairement aux autres pièces, plus l'agression en oxygène est forte, plus la protection est efficace.

En outre, cette pièce mécanique en matériau composite, notamment du fait de sa simplicité de fabrication, peut présenter un diamètre supérieur au mètre et peut par exemple constituer le nez d'une navette.

Par ailleurs, les propriétés mécaniques de cette pièce sont améliorées par rapport à celles des pièces de l'art antérieur et aucune couche n'est nécessaire entre les fibres et la matrice pour assurer entre elles une liaison mécanique adéquate comme décrit dans le document FR-A-2 544 661.

Le principe physique mis en oeuvre dans l'invention est totalement différent de ceux utilisés jusqu'à présent et décrits ci-dessus ; il est particulièrement bien adapté aux conditions d'oxydation qui sont du même type que celles d'une rentrée dans une atmosphère oxydante. Dans ce cas, le flux d'oxygène et les températures mis en jeu sont très élevés et les vitesses d'oxydation d'un matériau carbone-carbone non protégé peuvent atteindre 1mm par minute durant la rentrée, en moyenne.

Le principe de l'invention consiste à créer une barrière de diffusion gazeuse à la surface du matériau. Ainsi, plus les conditions d'oxydation sont fortes, plus l'efficacité de la barrière s'élève.

Une barrière de diffusion gazeuse est beaucoup plus facile à réaliser qu'une couche étanche au gaz, comme recherché jusqu'ici, du fait que justement on n'a pas besoin d'une étanchéité parfaite ; il suffit d'empêcher le flux aérodynamique de parvenir au front d'oxydation. Dans ce cas également, la protection des fibres est simultanée à celle de la matrice et aucune action spécifique sur ce point n'a besoin d'être réalisée. Quand la barrière de diffusion gazeuse est faite, les cinétiques d'oxydation de la pièce en matériau composite sont pilotées par la diffusion de l'oxygène à l'état gazeux ; les lois de cinétiques sont des lois de type parabolique.

Selon l'invention, cette barrière de diffusion est formée par du SiC en poudre situé en particulier dans les grosses porosités du matériau composite. En présence d'oxygène, ce SiC s'oxyde en SiO₂ et lie les différentes particules entre elles pour créer cette barrière.

Ce principe, totalement nouveau, diminue de façon efficace les vitesses d'oxydation du matériau composite en présence de flux oxydant. Cette efficatité de protection contre l'oxydation fait entre autres que les fibres du matériau n'ont absolument pas besoin d'être revêtues de carbone pyrolytique, de couches de SiC ou autres couches de protection.

En outre, une protection efficace contre l'oxydation peut être obtenue sans qu'il soit nécessaire de recouvrir l'ensemble de la pièce en matériau composite d'une ou plusieurs couches externes de matériau réfractaire inorganique, contrairement à toutes les techniques connues jusqu'à ce jour, d'introduction de particules ralentisseuses d'oxydation dans la matrice de la pièce.

La pièce en matériau composite de l'invention est donc beaucoup plus simple que celles de l'art antérieur et sa mise en oeuvre est beaucoup moins coûteuse.

De façon plus précise, l'invention a pour objet une pièce structurale en matériau composite, protégée contre l'oxydation, comportant une préforme fibreuse constituée uniquement de fibres de carbone noyées dans une matrice de carbone dont les porosités renferment de la poudre ultrafine de carbure de silicium cristallin jouant le rôle de barrière de diffusion gazeuse, la quantité de poudre représentant de 5 à 30% en poids de l'ensemble préforme-matrice-poudre.

Dans tout le texte, les pourcentages des différents constituants du matériau composite sont donnés pour un matériau sans P.A.O. externe.

De préférence, on utilise de 5 à 20% en poids de SIC par rapport à l'ensemble préforme-matrice-poudre. Pour une quantité de SiC >30% en poids, les propriétés mécaniques de la pièce se dégradent.

La pièce en carbone-carbone de l'invention a des performances de tenue à l'oxydation, sans couche de protection externe (P.A.O.) et sans couche de protection des fibres, dans une plage de température allant jusqu'à 1700°C. La matrice armée et dopée a à elle seule une capacité élevée de résistance à l'oxydation et assure la protection de la pièce.

Les fibres de carbone du commerce actuellement prévues pour réaliser les matériaux composites à matrice de polymère doivent présenter une bonne liaison fibres-matrices pour que les efforts soient bien transmis des fibres aux matrices. Pour cela, les fabricants de fibres de carbone réalisent au préalable un traitement de finition volontaire des fibres consistant en particulier en une oxydation ménagée de ces fibres, soit électrochimique, soit thermique.

Un tel traitement est décrit dans le document "Mechanical behaviour of carbon-carbon composites made with surface treated carbon fibers" de L.M. Manocha et al., Carbon Vol.27, No 3, pp.381-387, 1989 et dans le document Chemical Technology review no 162, "Carbon and graphite fibers ; manufacture and applications" de Marshal Sitting, édité par Noyes Data Corporation (NDC), 1980, p. 198 à 225.

Afin d'optimiser les propriétés mécaniques de la pièce en matériau composite carbone-carbone de l'invention, on utilise des fibres de carbone n'ayant subi aucun traitement de finition volontaire. Dans ce cas, les liaisons fibres-matrices sont plus faibles que celles obtenues avec des fibres ayant subi un traitement de finition, ce qui est le but recherché du fait de la fragilité de la matrice et du fait qu'on ne veut pas que cette fragilité se propage dans les fibres. En outre, ceci abaisse le coût de fabrication des matériaux composites.

La pièce de l'invention est destinée plus spécialement à constituer des éléments de structure tels que le nez, les ailerons ou bords d'attaque d'un véhicule spatial. Dans ce cas, le taux volumique de fibres, qui représente le rapport volume occupé par les fibres/volume total du matériau, est ≥40% et en pratique choisi de 45 à 60%. De plus, les fibres utilisées sont de preférence continues et orientées selon plus de deux directions.

La poudre de SiC utilisée doit présenter des grains dont le diamètre moyen est inférieur à 1/10 du diamètre des fibres. Ainsi, pour des fibres de carbone ayant des diamètres de fibres de 5 à 10µm, la poudre doit présenter une granulométrie submicronique.

De préférence, on utilise des poudres de granulométrie allant de 0,1µm à 0,6µm. Avec une granulométrie trop fine il n'y a pas agglomération des grains et avec une granulométrie trop élevée les grains ne peuvent pas se loger dans les porosités de la matrice.

Une telle granulométrie suffit du fait que la poudre n'a pas nécessairement besoin d'aller dans les fibres, elle doit simplement aller dans les porosités entre les fibres (fissures ou poches - octets dans le cas des matériaux tissés selon la technique 3D -). On entend par poches (ou octets) les vides du substrat présents entre les fibres avant sa densification.

L'introduction de la poudre dans la pièce de l'invention est réalisée en même temps que sa densification. Ainsi, aucune étape supplémentaire par rapport à la réalisation d'une pièce en carbone-carbone non dopé, donc non protégée, n'est nécessaire pour sa protection contre l'oxydation.

Selon l'invention, la matrice de carbone résulte au moins en partie de la pyrolyse d'une résine polymérisée précurseur de carbone.

La pièce en matériau composite décrite précédemment a été mise au point dans l'optique de l'utilisation d'un véhicule spatial ne réalisant qu'une seule mission. Pour une utilisation pluri-mission, il est préférable de réaliser une protection externe contre l'oxydation recouvrant toute la surface externe de la pièce.

Cette protection externe ou P.A.O. externe, est constituée d'une ou plusieurs couches externes de céramiques. Cette couche externe peut être en SiC, Si₃N₄ ou en un oxyde réfractaire tel que ThO₂, ZrO₂, HfO₂, La₂O₃, Y₂O₃, et Al₂O₃.

Lorsqu'on utilise comme couche externe une couche de SiC, celle-ci se fissure du fait de la différence des coefficients de dilatation thermique entre le carbone de la matrice et des fibres et le SiC de la couche externe. Il est alors nécessaire d'effectuer une cicatrisation de ces fissures en déposant sur cette couche de SiC une couche d'oxyde réfractaire tel que ceux cités précédemment.

Afin d'éviter une réaction chimique entre le carbure de la couche externe de SiC et la couche d'oxyde, on peut utiliser une couche intermédiaire de barrière de réaction. Comme couche intermédiaire, on peut utiliser l'une de celles décrites dans le document FR-A-2 635 773.

De préférence, la couche intermédiaire de barrière de réaction est en AlN ou HfN.

Pour la cicatrisation des fissures de la couche externe de SiC, il est aussi possible d'utiliser de la silice et/ou un verre borosilicaté (SiO₂-B₂O₃) comme décrit dans le document US-A-4 863 773.

En l'absence de la couche externe de SiC, il est préférable d'interposer entre la couche externe d'oxyde et le matériau carbone-carbone sous-jacent une couche intermédiaire de barrière de réaction telle que celle décrite dans le document FR-A-2 635 773.

Quelle que soit la constitution de la P.A.O., la couche d'oxyde la constituant constitue généralement la couche la plus externe.

Pour une pièce mécanique comportant une P.A.O. telle que décrite précédemment, le matériau sous-jacent renfermant la poudre de SiC joue le rôle d'élément de sécurité en cas de détérioration accidentelle de la P.A.O. (par exemple grêle, metéorites pour un véhicule spatial). Dans ce cas, la rentrée dans l'atmosphère du véhicule spatial pourra se faire sans problème. La poudre de SiC introduite dans la matrice joue alors le rôle d'un deuxième niveau de protection contre l'oxydation de la pièce, le premier niveau de protection étant assuré par la P.A.O.

L'invention a aussi pour objet un procédé de fabrication d'une pièce en matériau composite telle que décrite précédemment.

Suivant la nature de la préforme fibreuse, l'imprégnation des fibres de carbone par la résine précurseur de carbone et la poudre de SiC peut être réalisée avant ou après la mise en forme de la préforme fibreuse.

Aussi, un premier procédé consiste à : (a) réaliser une préforme fibreuse de la pièce, constituée uniquement de fibres de carbone, (b) imprégner cette préforme par un bain d'imprégnation contenant une résine précurseur de carbone et de la poudre ultrafine de SiC cristallin, dout le diamètre moyen des grains est inférieur à 1/10 du diamètre des fibres la quantité de poudre de SiC dans le bain étant telle que cette poudre représente de 5 à 30% en poids de la préforme densifiée, (c) polymériser la résine de la préforme chargée puis la pyrolyser pour la transformer en carbone et densifier ainsi la préforme chargée.

Un second procédé consiste a : (A) imprégner au moins une fibre de carbone par un bain d'imprégnation contenant une résine précurseur de carbone et de la poudre ultrafine de SiC cristallin, dout le diamètre moyen des grains est inférieur à 1/10 du diamètre des fibres la quantité de poudre de SiC dans le bain étant telle que cette poudre représente de 5 à 30% en poids de la préforme densifiée, (B) réaliser une préforme fibreuse de la pièce, constituée uniquement de cette fibre de carbone imprégnée, (C) polymériser la résine de la préforme chargée puis la pyrolyser pour la transformer en carbone et densifier ainsi la préforme chargée.

Contrairement, aux documents US-A-4 976 899 et US-A-4 863 773, le dopage en SiC selon l'invention de la matrice de carbone n'est pas apporté par des résines précurseurs de carbone comportant des groupements fonctionnels pourvus de liaisons Si-O. Les résines utilisables dans l'invention peuvent donc être celles classiquement utilisées pour la fabrication des pièces en carbone-carbone non protégées contre l'oxydation.

Le procédé de l'invention peut donc être mis en oeuvre avec les mêmes moyens que ceux industriellement utilisés pour la fabrication de pièces carbone-carbone non protégées. Ainsi, on peut mieux gérer l'optimisation des propriétes mécaniques de la pièce mécanique que les procédés utilisant des résines modifiées.

Les résines utilisées dans l'invention sont donc choisies sur d'autres critères que celui de la tenue à l'oxydation de la pièce. Elles sont par exemple du type phénol-formaldéhyde, furannique, alcool polyfurfurylique, polydiéthylméthylbenzène, polybenzimidazol, etc. Pour des raisons de tenue mécanique, on peut aussi utiliser des résines modifiées qui, lors de leur pyrolyse, introduisent du SiC ou du BN dans la matrice.

De façon avantageuse, le bain d'imprégnation contient pour 100 parties en poids de résine, de 10 à 100 parties en poids de poudre de SiC et de 0 à 10 parties en poids de solvant.

Comme indiqué précédemment, le principe mis en jeu dans l'invention est la protection contre l'oxydation à l'aide d'une barrière de diffusion gazeuse.

Aussi, l'invention a encore pour objet un procédé de protection contre l'oxydation vis-à-vis d'un flux gazeux oxydant jusqu'à 1700°C d'un matériau composite à fibres de carbone liées entre elles par une matrice de carbone, consistant à former dans la matrice une barrière de diffusion gazeuse en SiO₂ poreux par transformation d'une poudre ultrafine de SiC cristallin, disposée dans les porosités de la matrice à raison de 5 à 30% en poids de l'ensemble fibres-matrice-poudre.

D'autres caractéristiques et avantages de l'invention ressortiront mieux de la description qui va suivre, donnée à titre illustratif et non limitatif en référence aux dessins annexés dans lesquels :
- la figure 1a représente schématiquement une pièce en matériau composite conforme à l'invention et la figure 1b illustre schématiquement le principe de fonctionnement de la protection mis en jeu dans la pièce de la figure 1a,
- les figures 2 et 3 illustrent schématiquement les différentes étapes de fabrication de diverses pièces en matériau composite, conformes à l'invention, dépourvues d'une P.A.O. externe, et
- la figure 4 illustre schématiquement une pièce en matériau composite conforme à l'invention, pourvue d'une P.A.O. externe.

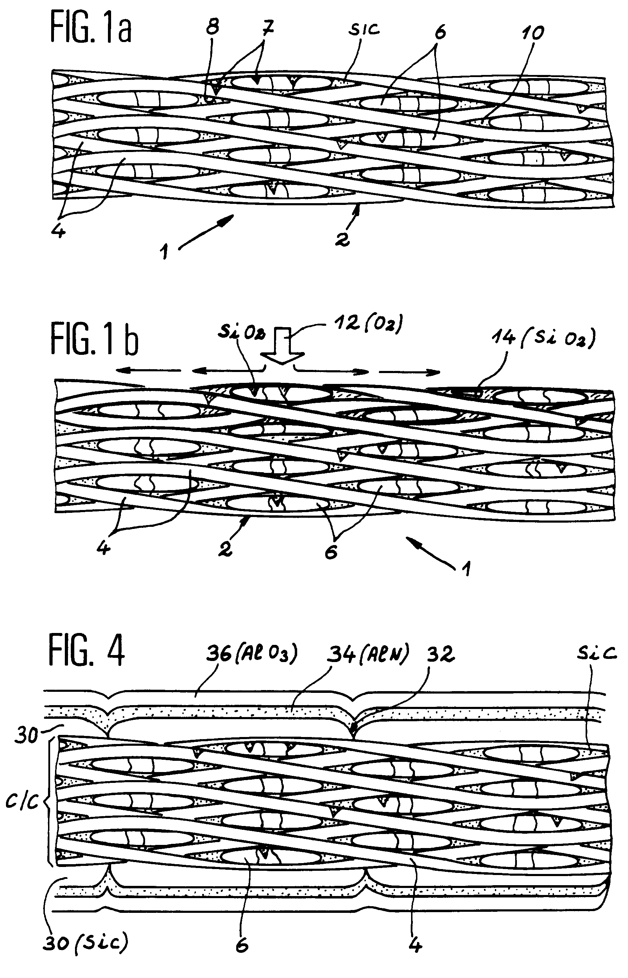

La pièce en matériau composite representée sur la figure 1 est une plaque plane 1 constituée d'une préforme fibreuse formée uniquement de fibres continues de carbone 4 non traitées tissées selon la technique 2,5D décrite dans le document FR-A-2 610 951 ; les fibres 4 sont en fait des torons constitués de plusieurs centaines de fibrilles de carbone.

Ces torons tissés 4 sont noyés dans une matrice 6 de carbone résultant de la pyrolyse d'une résine polymérisée, précurseur de carbone.

A titre d'exemple, les fibres 4 proviennent de la pyrolyse du polyacrylonitrile (PAN). Elles présentent un diamètre de 7µm environ.

Par ailleurs, les résines utilisées sont en particulier des résines phénolformaldéhyde du type Résol.

Dans les fissures 7 de la matrice de carbone 6 et dans les octets (ou poches) 8 entre les torons tissés 4, est logée de la poudre ultrafine 10 de SiC cristallin. Cette poudre a une granulométrie inférieure à 1/10 du diamètre des fibres 4. Dans ce cas particulier, la granulométrie est < à 0,7µm et est typiquement de 0,1µm à 0,6µm. La poudre représente de 5 à 30% en poids de la plaque et typiquement 15% en poids.

Sur la figure 1a, la pièce en matériau composite de l'invention est représentée avant d'être soumise à un flux d'oxygène et sur la figure 1b, on a représenté cette même pièce lorsqu'elle est soumise à un flux d'oxygène 12.

Dès que la pièce 1 est soumise au flux d'oxygène 12, la poudre 10 de SiC contenue dans les fissures 7 et les octets 8 se transforme en SiO₂ poreux tout en restant à la même place et le carbone du SiC est consommé. Le SiC oxydé restant à sa place, il se forme une couche d'oxyde de silicium 14 qui représente les négatifs des porosités 7 et 8 de la pièce initiale.

Cette couche 14 d'oxyde SiO₂ poreux joue le rôle de barrière de diffusion gazeuse et réduit de ce fait la consommation de carbone de la matrice et des fibres.

Plus l'oxydation avance, plus la couche 14 s'épaissit et plus la protection contre l'oxydation de la pièce augmente.

Le fait d'utiliser des fibres ou torons 4 non traités est compatible avec tout type de matrice et permet une grande souplesse de choix des caractéristiques au niveau de l'interface fibres-matrice. Ainsi, aucune couche du type pyrocarbone (voir FR-A-2 544 661) ou de Sic (voir EP-A-427 629) n'est nécessaire pour améliorer la liaison fibres-machine.

L'utilisation de fibres non traitées correspond à une optimisation des propriétés mécaniques de la pièce en matériau composite ainsi qu'à un abaissement de son coût de fabrication.

Avec les charges de SiC, on rajoute l'aspect tenue à l'oxydation.

La description qui suit concerne différents exemples de fabrication de pièces en matériau composite, conformément à l'invention.

### EXEMPLE 1

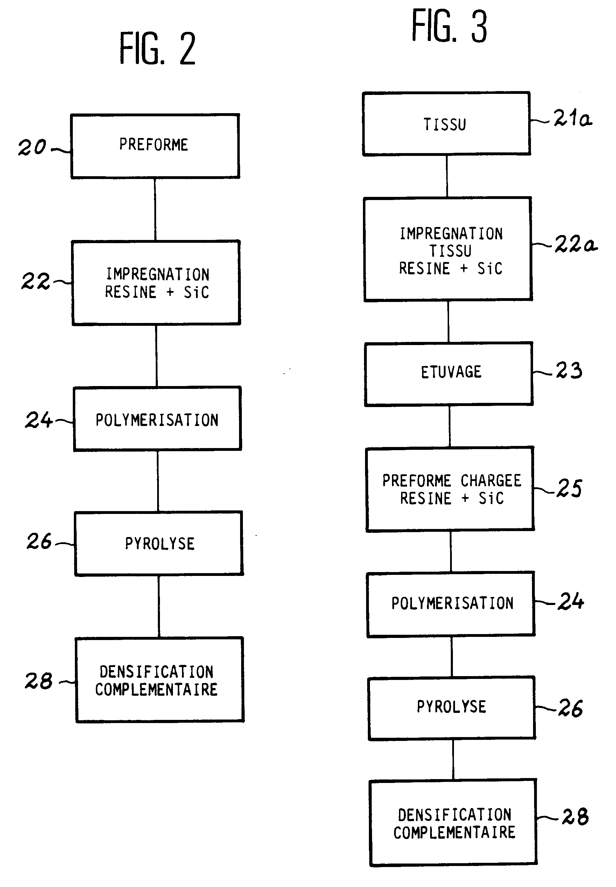

Cet exemple est décrit en référence à la figure 2, illustrant les différentes étapes de fabrication d'une pièce structurale conforme à l'invention. Cette pièce se présente sous la forme d'une plaque plane dont la préforme fibreuse est réalisée avec des fibres continues de carbone non traitées, tissées selon la technique 3D décrite par exemple dans le document FR-A-2 612 950. Ces fibres proviennent de la pyrolyse de PAN.

La réalisation de la préforme fibreuse de la pièce est schématisée par le bloc 20 de la figure 2.

La seconde étape du procédé consiste, comme schématisé par le bloc 22, à imprégner la préforme fibreuse d'un mélange de résine précurseur de carbone et de poudre de SiC cristallin. Ce mélange contient en particulier 100 parties en poids de résine phénolformaldéhyde, de 10 à 100 parties en poids de poudre de SiC et de 0 à 100 parties en poids de solvant tel qu'un alcool inférieur. Le mélange est réalisé soigneusement de façon à être homogène et bien dispersé. A cet effet, on utilise un disperseur et en particulier un disperseur à ultrasons.

A titre d'exemple, le mélange contient 100 parties en poids de résine formophénolique, 50 parties en poids de poudre de SiC, 50 parties en poids d'alcool ; la poudre de SiC est du VF25 de chez Lonza de granulométrie comprise entre 0,1 et 0,6µm.

Lorsque le mélange est homogène, on effectue l'imprégnation sous vide jusqu'à ce que le mélange résine-SiC ne forme plus de bulle. La pression régnant dans l'enceinte à vide est de 10³Pa. Par ailleurs, celle-ci est portée à une température de 70°C. L'imprégnation de la préforme fibreuse par le mélange résine-poudre de SiC est réalisée pendant 24 heures.

L'étape suivante du procédé, symbolisée par le bloc 24 de la figure 2, consiste à polymériser la résine sous gaz neutre (azote, argon) sous une pression de 10⁵ et à une température de 200°C.

On effectue ensuite la transformation de la résine polymérisée en coke. Cette transformation consiste en une pyrolyse à 850°C pendant 3 heures sous gaz neutre à une pression de 10⁵Pa ; cette étape est symbolisée par le bloc 26 de la figure 2.

Afin de réduire les porosités de la pièce à une valeur égale ou inférieure à 5% (mesurée par voie hydrostatique), on effectue une densification complémentaire, symbolisée par le bloc 28, consistant en un ou plusieurs cycles d'imprégnation, de polymérisation et de pyrolyse avec de la résine phénolique seule. Le nombre de cycles avec la résine seule est en géneral de 1 à 3.

La pièce mécanique obtenue est prête à l'emploi après avoir subi un éventuel usinage.

### EXEMPLE 2

Cet exemple est décrit en référence à la figure 3 illustrant les différentes étapes de fabrication de pièces selon l'invention.

Selon un même principe, les inventeurs ont réalisé des pièces en matériau composite dont les fibres étaient tissées selon la technique 2D. On réalise tout d'abord un tissu, comme indiqué par le bloc 20a, constitué de torons de fibres continues de carbone non traitées, disposés parallèlement entre eux pour former des nappes ; les torons de deux nappes consécutives sont perpendiculaires entre eux.

Parallèlement, on réalise un mélange de résine phénoîformaldéhyde, précurseur de carbone, et de poudre de SiC cristallin ayant une granulométrie de 0,1µm à 0,6µm. Le mélange contient 100 parties en poids de résine et de 5 à 100 parties en poids de SiC.

Afin d'améliorer l'homogénéisation du mélange, on peut rajouter de 0 à 30 parties en poids d'alcool inférieur (comportant de 1 à 5 atomes de carbone) comme l'isopropanol. La dispersion est assurée comme précédemment par ultrasons.

On effectue alors, comme symbolisé par le bloc 22a, l'immersion sous vide du tissu 2D dans la résine chargée jusqu'à ce qu'il n'y ait plus de bulle. On fait subir au tissu un égouttage pendant 30 minutes dans l'air à la pression atmosphérique.

On effectue ensuite un étuvage à 80°C pendant 1 heure à l'air libre afin d'enlever l'excès de résine. Cette étape est symbolisée par le bloc 23.

Le tissu préimpregné obtenu peut être stocké en chambre froide, à une température inférieure à -18°C, et attendre d'être utilisé.

Ce tissu peut être utilisé de la façon suivante :
- découpe de morceaux de tissu,
- empilage des morceaux de tissu découpés dans un moule de forme adaptée à la pièce structurale à réaliser,
- pressage de ces morceaux de tissu à froid à une pression supérieure à 10⁵Pa, puis
- polymérisation, pyrolyse et finition de la pièce comme décrit précédemment.

Les étapes de découpe, empilage et pressage des morceaux de tissu constituent l'étape 25 de réalisation de la préforme fibreuse chargée de résine et de SiC.

### EXEMPLE 3

Il est aussi possible, avant l'imprégnation du tissu par le mélange résine-poudre de SiC tel que décrit dans l'exemple 2, de pré-imprégner les fibres à l'aide d'un brai, à pression atmosphérique en vue d'augmenter la densité de la pièce en carbone-carbone.

### EXEMPLE 4

On peut réaliser la même chose que dans l'exemple 2 en imprégnant non plus un tissu mais du fil avec le mélange résine-SiC pour obtenir un fil préimpregne, puis en tissant ce fil préimprégné pour obtenir l'architecture du substrat souhaité. La suite, polymérisation, pyrolyse, etc. est inchangée.

### EXEMPLES 5 ET 6

Il est aussi possible d'imprégner une préforme fibreuse avec un mélange résine-SiC contenant très peu de résine. Par exemple, une barbotine constituée d'une solution aqueuse amoniacale à pH 12, à 200g/l de poudre de SiC (référence VF25 de chez Lonza) et contenant 10% en poids de résine phénolique convient.

L'imprégnation est alors réalisée comme dans l'exemple 1, sous vide jusqu'à ce que le mélange ne forme plus de bulles ; la pression est alors de 10³Pa. La polymérisation de la résine et sa pyrolyse sont également menées selon l'exemple 1.

L'intérêt de cette méthode est qu'il est alors possible de finir la densification (étape 28) en imprégnant la pièce déjà densifiée par du brai ou en effectuant un dépôt de carbone par dépôt chimique en phase vapeur (DCPV) au lieu d'effectuer les cycles d'imprégnation de résine seule, de polymérisation et de pyrolyse de cette résine décrit dans l'exemple 1, de façon à obtenir une matrice de carbone plus dense et plus conductrice de la chaleur.

Les pièces en matériau composite décrites précédemment ne comportaient pas de P.A.O. externe, la protection contre l'oxydation des pièces étaient assurée uniquement par la poudre de SiC introduite dans la matrice.

Dans le cadre de pièces pour véhicules spatiaux devant effectuer plusieurs missions, il est souhaitable d'adjoindre une P.A.O. externe à la pièce, comme représenté sur la figure 4.

Cette pièce se différencie de celle de la figure 1 uniquement par la présence de la P.A.O. Cette dernière comporte une couche externe 30 de SiC sur toute sa surface externe, de 300 à 500 µm d'épaisseur, obtenue par siliciuration du carbone de la matrice 6 et des fibres 4, en surface. Cette siliciuration est réalisée en immergeant la pièce par exemple dans un mélange de poudre d'Al₂O₃, de Si et de SiC à 1700°C.

Cette siliciuration peut être suivie d'un dépôt de SiC par DCPV afin d'effectuer un premier colmatage des fissures 32 formées dans la couche 30 de SiC du fait des différences de coefficient thermique entre le carbone et le carbure de silicium. Ce colmatage est effectué à 950°C avec un mélange d'H₂ et de CH₃SiCl₃.

On effectue alors le dépôt d'une couche intermédiaire 34 d'AlN de 0,2 à 3µm d'épaisseur environ recouvrant toute la couche externe 30 de SiC. Cette couche d'AlN est obtenue par DCPV à 950°C en utilisant un mélange d'AlCl₃, d'H₂ et de NH₃. Elle joue le rôle de barrière de diffusion entre la couche externe 30 de SiC et la couche ultime de protection 36 en alumine.

Cette couche d'alumine 36 est déposée par DCPV à 950°C en utilisant un mélange d'AlCl₃, d'H₂O et de CO₂. Elle présente une épaisseur de 2 à 100µm.

Les conditions de dépôt des couches de SiC, d'AlN et d'Al₂O₃ sont en particulier celles données dans le document US-A-5 051 300.

Différents matériaux composites carbonecarbone du type 2,5D ont éte testés. Les fibres étaient des fibres non traitées organisées en torons de 7µm de diamètre, obtenues à partir du PAN. La matrice de carbone provenait d'une résine phénolformaldéhyde. Les matériaux avaient une épaisseur de 2,5mm.

L'échantillon n°1 constituant la référence comporte une densité de 1,56 et comme protection anti-oxydation un empilement de couches de SiC et de verre boro-silicaté comme décrit dans le document US-A-4 976 899.

L'échantillon n°2, conforme à l'invention, contient de la poudre de SiC avec une granulométrie de 0,1 à 0,6µm ; l'imprégnation a été réalisée dans un mélange contenant 50 parties en poids de SiC cristallin pour 100 parties en poids de résine, ce qui représente 10 à 12% en poids de SiC dans le composite. Il a une densité de 1,63.

L'échantillon n°3 est un matériau composite dépourvu de protection contre l'oxydation, de densité 1,56.

L'échantillon n°4 est un matériau composite contenant 8% en poids de poudre de BN, de densité 1,55.

L'échantillon n°5 est un matériau composite dopé par du SiC introduit à partir d'une résine modifiée. Il contient 4% en poids de SiC amorphe et présente une densité de 1,63.

Les tests ont été effectués avec un chalumeau oxyacétylénique réglé oxydant. Au cours des essais, la température est gardée constante. La température du chalumeau a été mesurée avec un thermocouple.

### Matériau C/C non dopé (n°3)

Ce matériau présente les vitesses d'oxydation les plus rapides à toutes les températures. On constate en outre que cette vitesse croît rapidement avec la température. De plus, on a systématiquement perçage des échantillons.

### Matériau C/C à matrice dopée avec poudre de Sic (n°2)

Pour ce type de matériau, on distingue deux cas :

Au-dessous de 1700°C, la vitesse d'oxydation est faible, augmentant mais lentement avec la température. Cette vitesse d'oxydation varie entre la moitié et le tiers de celle du matériau non dopé. Dans ce domaine de températures, il n'y a pas perçage de matériau mais formation d'une couche grise de SiO₂ poreux qui reste à la surface des échantillons.

Au-dessus de 1700°C, la vitesse d'oxydation augmente rapidement, en restant toujours inférieure à celle du C/C non dopé. Dans ce domaine de températures, il y a perçage du matériau ; la couche SiO₂ existe toujours mais a tendance à fondre.

Ce matériau a donc une vitesse d'oxydation au moins deux fois plus faible que le composite non dopé entre 800 et 1700°C (température de transition).

On a obtenu les mêmes résultats pour un composé à poudre de SiC dont la résine était une résine "modifiée SiC".

### Matériau C/C à matrice dopée BN (n°4)

Ce matériau se caractérise par une oxydation très faible à 800°C mais dès 1000°C le comportement de ce matériau rejoint celui du matériau non dopé, avec perçage du matériau. Son efficacité disparaît donc au-dessus de 1000°C.

### Matériau C/C avec résine "modifiée SiC" (n°5)

Ce matériau a une température de transition plus basse que celle du composite dopé avec la poudre de SiC. A des températures inférieures à 800°C, ce matériau a une vitesse d'oxydation très faible, mais dès 1000°C, les vitesses d'oxydation deviennent supérieures à celles du matériau dopé avec de la poudre de SiC. Enfin, après 1350°C, ce matériau a un comportement identique à celui du composite non dopé.

Son efficacité disparaît donc au-dessus de 1350°C.

Des essais avec une torche à plasma, simulant les conditions de rentrée dans l'atmosphère d'un véhicule spatial à 1500°C et une pression atmosphérique de 75x10²Pa, ont été réalisés sur différents matériaux. Les résultats sont portés dans le tableau I ci-après.

Dans ce tableau, les vitesses d'oxydation sont exprimées en g/min et en mm/min. Les pertes de masse sont mesurées par pesée avant et après le test d'oxydation et les pertes d'épaisseur sont mesurées par mesure initiale et finale au palmer pour les matériaux composites C/C non dopés, à résine modifiée et par mesure initiale au palmer et finale en micrographie pour les matériaux présentant un matelas de protection.

**TABLEAU I**

| MATERIAU | DUREE DU PALIER | PERTE DE MASSE (g/min) | VITESSE D'ABLATION (mm/min) |
|---|---|---|---|
| C/C 2,5D non dopé | 2 | 0,63 | 0,74 |
| C/C 2,5D avec matrice dopée SiC | 1,8 | 0,16 | 0,227 |
| C/C 2,5D avec résine "modifiée SiC" | 2 | 0,319 | 0,42 |

De ce tableau, il ressort que la vitesse d'oxydation est d'autant plus élevée que la densité du matériau est faible.

Le matériau composite à poudre de SiC s'oxyde dans tous les cas moins vite que le C/C non dopé ; les flux d'oxygène appliqués deviennent proches de ceux appliqués sur un matériau avec PAO.

Les vitesses d'oxydation les plus faibles sont obtenues pour le matériau composite à poudre de SiC. Il conduit à une vitesse d'ablation de 3 à 4 fois plus lente que celle du C/C non dopé. En outre, la vitesse d'ablation décroît au cours du temps.

Le matériau à résine "modifiée SiC" à une perte de poids et une vitesse d'ablation deux fois plus fortes que celles du composite à poudre de SiC, d'où l'intérêt d'utiliser du SiC cristallin en poudre.

Une étude micrographique a permis de montrer que pour un matériau C/C non dopé, l'oxydation se faisait sur une surface et non sur une certaine profondeur du matériau et que cette surface suivait les macroporosités du matériau. On a donc affaire à un "front" d'oxydation.

Dans tous les essais, pour une oxydation au-dessous de 1700°C environ, on constate pour le matériau C/C à poudre de SiC la formation d'un matelas" ; ce matelas a la forme des macroporosités du matériau, c'est-à-dire des "poches", espaces inter-torons, macrofissures inter-torons. Après oxydation, ces macroporosités donnent naissance à des parois, les espaces entre les parois correspondent à la partie dense des torons et les filaments sont très serrés.

Par ailleurs, la surface d'oxydation est relativement plane et parallèle à la surface initiale.

Une analyse du matelas montre qu'il est constitué de SiC oxydé en SiO₂ poreux.

Au-dessus de 1700°C, il n'y a plus formation du matelas. Plus probablement, il y a effondrement de celui-ci et formation d'une couche, par fusion, qui recouvre le composite sain et conduit au percement.

On constate par ailleurs que l'on n'a plus la même notion de front d'oxydation du carbone-carbone tel que décrit précédemment pour les matériaux composites à matrice exempte de poudre de SiC, mais on obtient bien une interface d'oxydation diffuse (d'ou la notion de barrière de diffusion gazeuse).

On constate que les grains de SiC sont liés entre eux par oxydation et par leur gonflement associé. On constate de plus que ce matériau présente une porosité importante, ce qui montre qu'il n'y a pas eu effondrement du matériau.

Avec un matériau composite dopé avec de la poudre de SiC, selon l'invention, dont la résine est une résine "modifiée SiC", on a obtenu les mêmes résultats que ceux obtenus avec une résine non modifiée. Ceci montre bien l'importance d'introduire le SiC sous forme de poudre cristalline dans les porosités de la matrice.

Les pièces en matériau composite de l'invention, sans protection externe, peuvent résister jusqu'à 1700°C. Au-dessus de 1700°C, le film de SiO₂ formé par oxydation de la poudre de SiC réagit avec le SiC résiduel en donnant du SiO volatil. De plus, la silice devient liquide et ne peut plus constituer un film solide protecteur.

## Revendications

1. Piéce structurale en matériau composite du type carbone-carbone, comportant une préforme fibreuse (2) constituée uniquement de fibres de carbone (4) noyée dans une matrice (6) de carbone, caractérisée en ce que cette pièce est protégée contre l'oxydation en présence d'un flux oxydant à des températures allant de 1000°C à 1700°C, par la présence dans les porosités de la matrice de carbone d'une poudre (10) ultrafine de SiC cristallin dout le diamètre moyen des grains est inférieur à 1/10 du diamètre des fibres qui sera transformée en SiO₂ lors de l'exposition audit flux oxydant à une température de 1000 à 1700°C et jouera le rôle de barrière de diffusion vis-à-vis du flux oxydant, la quantité de poudre de SiC cristallin représentant de 5 à 30 % en poids de l'ensemble préforme-matrice-poudre.

2. Pièce selon la revendication 1, caractérisée en ce que la poudre a une granulométrie inférieure à 1/10 du diamètre des fibres.

3. Pièce selon la revendication 1 ou 2, caractérisée en ce que les fibres de carbone sont non traitées.

4. Pièce selon l'une quelconque des revendications 1 à 3, caractérisée en ce que la matrice résulte au moins en partie de la pyrolyse d'une résine polymérisée précurseur de carbone.

5. Pièce selon l'une quelconque des revendications 1 à 4, caractérisée en ce que l'ensemble préforme-matrice est recouvert d'au moins une couche externe (30, 32) de céramique.

6. Pièce selon la revendication 5, caractérisée en ce que la couche externe est une couche de carbure de silicium (30).

7. Pièce selon la revendication 6, caractérisée en ce que la couche de carbure de silicium (30) est recouverte d'une couche ultime d'oxyde réfractaire (36).

8. Pièce selon la revendication 5, caractérisée en ce que la couche externe est une couche d'oxyde réfractaire (32).

9. Pièce selon la revendication 7 ou 8, caractérisée en ce qu'une couche intermédiaire de barrière de réaction est prévue entre la couche d'oxyde (32) et le matériau sous-jacent (3), 6).

10. Pièce selon l'une quelconque des revendications précédentes, caractérisée en ce que les fibres représentent au moins 40% en volume de l'ensemble préforme-matrice-poudre.

11. Pièce selon l'une quelconque des revendications précédentes, caractérisée en ce que les fibres sont continues et/ou agencées selon au moins deux directions de l'espace.

12. Procédé de fabrication d'une pièce structurale en matériau composite du type carbone-carbone, protégée contre l'oxydation, consistant à :
(a) - réaliser une préforme fibreuse de la pièce uniquement constituée de fibres de carbone ;
(b) - imprégner cette préforme par un bain d'imprégnation contenant une résine précurseur de carbone et de la poudre ultrafine de SiC cristallin dout le diamètre moyen des grains est inférieur à 1/10 du diamètre des fibres la quantité de poudre de SiC dans le bain étant telle que cette poudre représente de 5 à 30 % en poids de la préforme densifiée ;
(c) - polymériser la résine de la préforme chargée puis la pyrolyser pour la transformer en carbone et densifier ainsi la préforme chargée.

13. Procédé de fabrication d'une pièce structurale en matériau composite du type carbone-carbone protégée contre l'oxydation, comportant une préforme fibreuse noyée dans une matrice, consistant à :
(A) - imprégner au moins une fibre carbone par un bain d'imprégnation contenant une résine précurseur de carbone et de la poudre ultrafine de SiC cristallin dout le diamètre moyen des grains est inférieur à 1/10 du diamètre des fibres la quantité de poudre de SiC dans le bain étant telle que cette poudre représente de 5 à 30% en poids de la préforme densifiée ;
(B) - réaliser une préforme fibreuse de la pièce uniquement à partir de cette fibre de carbone imprégnée ;
(C) - polymériser la résine de la préforme chargée puis la pyrolyser pour la transformer en carbone et densifier ainsi la préforme chargée.

14. Procéde selon la revendication 12 ou 13, caractérisé en ce qu'il comporte en outre au moins un cycle de densification supplémentaire par du carbone.

15. Procédé selon la revendication 14, caractérisé en ce que le cycle de densification supplémentaire consiste à imprégner la préforme chargée de SiC et de carbone par une résine précurseur de carbone, à polymériser cette résine puis à la pyrolyser.

16. Procédé selon la revendication 14, caractérisé en ce que le cycle de densification supplémentaire consiste à imprégner la préforme chargée de SiC et de carbone par du brai ou à effectuer un dépôt chimique en phase vapeur de carbone.

17. Procédé selon l'une quelconque des revendications 12 à 16, caractérisé en ce que l'imprégnation par la résine chargée en SiC est réalisée en présence d'un solvant diminuant la viscosité du mélange.

18. Procedé selon l'une quelconque des revendications 12 à 17, caractérisé en ce que le bain d'imprégnation contient pour 100 parties en poids de résine, de 10 à 100 parties en poids de poudre de SiC et de 0 à 10 parties en poids de solvant.

19. Procéde selon l'une quelconque des revendications 12 à 18, caractérisé ce qu'on dépose sur la surface externe de la pièce au moins une couche externe de céramique.

20. Procédé de protection contre l'oxydation vis-à-vis d'un flux gazeux oxydant (12) à des températures de 1000°C à 1700°C d'un matériau composite à fibres de carbone (4) liées entre elles par une matrice de carbone (6) consistant à former dans la matrice une barrière de diffusion gazeuse (14) en SiO₂ poreux par transformation d'une poudre (10) ultrafine de SiC cristallin, disposée dans les porosités (7, 8) de la matrice à raison de 5 à 30% en poids de l'ensemble fibres-matrice-poudre.

21. Procédé selon la revendication 20, caractérisé en ce que la poudre a une granulométrie inférieure à 1/10 du diamètre des fibres.

22. Procédé selon la revendication 20 ou 21, caractérisé en ce que l'ensemble fibres-matrice est recouvert d'au moins une couche externe (30, 32) de céramique.

23. Procédé selon la revendication 22, caractérisé en ce que la couche externe est une couche de carbure de silicium (30).

24. Procédé selon la revendication 23, caractérisé en ce que la couche de carbure de silicium (30) est recouverte d'une couche ultime d'oxyde réfractaire (36).

25. Procédé selon la revendication 22, caractérisé en ce que la couche externe est une couche d'oxyde réfractaire (32).

26. Procédé selon la revendication 24 ou 25, caractérisé en ce qu'une couche intermédiaire de barrière de réaction est prévue entre la couche d'oxyde (32) et le matériau sous-jacent (30, 6).

27. Procédé selon l'une quelconque des revendications 20 à 26, caractérisé en ce que le flux oxydant est un flux d'air.

## Claims

1. Structural part made from a composite material of the carbon-carbon type, comprising a fibrous preform (2) constituted solely by carbon fibres (4) embedded in a carbon matrix (6), characterized in that said part is protected against oxidation in the presence of an oxidizing flow at temperatures from 1000 to 1700°C, by the presence in the pores of the carbon matrix of an ultrafine, crystalline SiC powder (10), whose mean grain diameter is below 1/10 of the fibre diameter, which will be transformed into SiO₂ during the exposure to said oxidizing flow at a temperature from 1000 to 1700°C and which will serve as a diffusion barrier with respect to the oxidizing flow, the crystalline SiC powder quantity representing 5 to 30% by weight of the preform-matrix-powder assembly.

2. Part according to claim 1, characterized in that the powder has a grain size less than 1/10 of the diameter of the fibres.

3. Part according to claim 1 or 2, characterized in that the carbon fibres are untreated.

4. Part according to any one of the claims 1 to 3, characterized in that the matrix is at least partially the result of pyrolysis of a polymerized resin of a carbon precursor.

5. Part according to anyone of the claims 1 to 4, characterized in that the preform-matrix unit is covered with at least one external ceramic coating (30, 32).

6. Part according to claim 5, characterized in that the external coating is a layer of silicon carbide (30).

7. Part according to claim 6, characterized in that the coating of silicon carbide (30) is covered with a final coating of refractory oxide (36).

8. Part according to claim 5, characterized in that the external coating is a coating of refractory oxide (32).

9. Part according to claim 7 or 8, characterized in that an intermediate coating of a reaction barrier is provided between the oxide coating (32) and the underlying material (30, 6).

10. Part according to any one of the preceding claims, characterized in that the fibres represent at least 40% by volume of the preform-matrix-powder unit.

11. Part according to any one of the preceding claims, characterized in that the fibres are continuous and/or designed according to at least two directions in space.

12. Process for manufacturing a structural part made of carbon-carbon type composite, protected against oxidation, which consists of:
(a) making a fibrous preform of the part composed only of carbon fibres;
(b) impregnating this preform with an impregnation bath containing a carbon precursor resin and ultrafine crystalline SiC powder, whose mean grain diameter is less than 1/10 of the fibre diameter, with the amount of SiC powder in the bath being such that the powder represents 5% to 30% by weight of the densified preform;
(c) polymerizing the resin of the loaded preform, then pyrolyzing it to convert it into carbon and thus densify the loaded preform.

13. Manufacturing process for a structural part made of a composite of the type carbon/carbon protected against oxidation, composed of a fibrous preform immersed in a matrix that consists of:
(A) impregnating at least one carbon fibre with an impregnation bath containing a carbon precursor resin and ultrafine crystalline SiC powder, whose mean grain diameter is less than 1/10 of the fibre diameter, with the amount of powder in the bath being such that the powder represents from 5% to 30% by weight of the densified preform;
(B) making a fibrous preform of the part solely from this impregnated carbon fibre;
(C) polymerizing the resin of the loaded preform then pyrolyzing it to convert it into carbon and thus densify the loaded preform.

14. Process according to claim 12 or 13, characterized in that it also includes at least one additional densification cycle with carbon.

15. Process according to claim 14, characterized in that the additional densification cycle consists of impregnating the preform loaded with SiC and carbon with a carbon precursor resin, and polymerizing that resin and then pyrolyzing it.

16. Process according to claim 14, characterized in that the additional densification cycle consists of impregnating the preform loaded with SiC and carbon with pitch or carrying out chemical vapour deposition with carbon.

17. Process according to any one of the claims 12 to 16, characterized in that the impregnation with the resin loaded with SiC is carried out in the presence of a solvent that reduces the viscosity of the mixture.

18. Process according to any one of the claims 12 to 17, characterized in that the impregnation bath contains for 100 parts by weight resin from 10 to 100 parts by weight SiC powder and from 0 to 10 parts by weight solvent.

19. Process according to any one of the claims 12 to 18, characterized in that at least one external ceramic coating is deposited on the external surface of the part.

20. Process for protection against oxidation from an oxidizing gaseous flow (12) at temperatures from 1000 to 1700°C for a composite with carbon fibres (4) bonded to one another by a carbon matrix (6) consisting of forming in the matrix a gaseous diffusion barrier (14) of porous SiO₂ by converting an ultrafine crystalline SiC powder (10), placed in the porous spaces (7, 8) of the matrix at the rate of 5% to 30% by weight of the fibre-matrix-powder unit.

21. Process according to claim 20, characterized in that the powder has a granulometry less than 1/10 of the diameter of the fibres.

22. Process according to claim 20 or 21, characterized in that the fibre-matrix unit is covered with at least one external ceramic coating (30, 32).

23. Process according to claim 22, characterized in that the external coating is a coating of silicon carbide (30).

24. Process according to claim 23, characterized in that the silicon carbide coating (30) is covered with a final coating of refractory oxide (36).

25. Process according to claim 22, characterized in that the external coating is a coating of refractory oxide (32).

26. Process according to claim 24 or 25, characterized in that an intermediate coating of reaction barrier is provided between the oxide coating (32) and the underlying material (30, 6).

27. Process according to any one of the claims 20 to 26, characterized in that the oxidizing flow is an air flow.

## Patentansprüche

1. Strukturteil aus Verbundmaterial vom Kohlenstoff-Kohlenstoff-Typ, enthaltend eine faserige Vorform (2), die allein aus Kohlenstoffasern (4) besteht und in eine Kohlenstoffmatrix (6) eingebettet ist, dadurch gekennzeichnet, daß dieses Teil durch die Anwesenheit eines hochfeinen Pulvers (10) von kristallinem SiC in den Poren der Kohlenstoffmatrix vor Oxidation in Gegenwart eines oxidierenden Materiestroms bei Temperaturen, die von 1000°C bis 1700°C gehen, geschützt ist, wobei das Pulver, dessen mittlerer Korndurchmesser kleiner ist als 1/10 des Faserdurchmessers, in SiO₂ umgewandelt wird, wenn man es bei einer Temperatur von 1000 bis 1700°C dem genannten oxidierenden Materiestrom aussetzt, und gegenüber dem oxidierenden Materiestrom die Rolle einer Diffusionssperre spielt, wobei die Menge des Pulvers von kristallinem SiC 5 bis 30 Gew.-% der Gesamtheit von Vorform, Matrix und Pulver darstellt.

2. Teil nach Anspruch 1, dadurch gekennzeichnet, daß das Pulver eine Korngröße kleiner als 1/10 des Faserdurchmessers hat.

3. Teil nach Anspruch 1 oder 2, dadurch gekennzeichnet, daß die Kohlenstoffasern unbehandelt sind.

4. Teil nach einem der Ansprüche 1 bis 3, dadurch gekennzeichnet, daß die Matrix mindestens zum Teil aus der Pyrolyse eines polymerisierten Harzes, das ein Kohlenstoffvorläufer ist, hervorgeht.

5. Teil nach einem der Ansprüche 1 bis 4, dadurch gekennzeichnet, daß die Anordnung aus Vorform und Matrix mit mindestens einer äußeren Schicht (30, 32) von Keramik bedeckt ist.

6. Teil nach Anspruch 5, dadurch gekennzeichnet, daß die äußere Schicht eine Schicht von Siliciumcarbid (30) ist.

7. Teil nach Anspruch 6, dadurch gekennzeichnet, daß die Schicht von Siliciumcarbid (30) mit einer letzten Schicht von hitzebeständigem Oxid (36) bedeckt ist.

8. Teil nach Anspruch 5, dadurch gekennzeichnet, daß die äußere Schicht eine Schicht von hitzebeständigem Oxid (32) ist.

9. Teil nach Anspruch 7 oder 8, dadurch gekennzeichnet, daß zwischen der Oxidschicht (32) und dem darunterliegenden Material (30, 6) eine Zwischenschicht als Reaktionssperre vorgesehen ist.

10. Teil nach einem der vorhergehenden Ansprüche, dadurch gekennzeichnet, daß die Fasern mindestens 40 Vol.-% der Gesamtheit von Vorform, Matrix und Pulver darstellen.

11. Teil nach einem der vorhergehenden Ansprüche, dadurch gekennzeichnet, daß die Fasern kontinuierlich und/oder in mindestens zwei Richtungen des Raums ausgerichtet sind.

12. Verfahren zur Herstellung eines vor Oxidation geschützten Strukturteils aus Verbundmaterial vom Kohlenstoff-Kohlenstoff-Typ, darin bestehend:
(a) - eine faserige Vorform des Teils herzustellen, die allein aus Kohlenstoffasern besteht,
(b) - diese Vorform mit einem Imprägnierungsbad zu imprägnieren, welches ein Harz, das ein Kohlenstoffvorläufer ist, und hochfeines Pulver von kristallinem SiC, dessen mittlerer Korndurchmesser kleiner ist als 1/10 des Faserdurchmessers, enthält, wobei die Menge des SiC-Pulvers in dem Bad derart ist, daß dieses Pulver 5 bis 30 Gew.-% der verdichteten Vorform darstellt,
(c) - das Harz der gefüllten Vorform zu polymerisieren, es dann zu pyrolysieren, um es in Kohlenstoff umzuwandeln, und so die gefüllte Vorform zu verdichten.

13. Verfahren zur Herstellung eines vor Oxidation geschützten Strukturteils aus Verbundmaterial vom Kohlenstoff-Kohlenstoff-Typ, das eine faserige, in eine Matrix eingebettete Vorform enthält, darin bestehend:
(A) - mindestens eine Kohlenstoffaser mit einem Imprägnierungsbad zu imprägnieren, welches ein Harz, das ein Kohlenstoffvorläufer ist, und hochfeines Pulver von kristallinem SiC, dessen mittlerer Korndurchmesser kleiner ist als 1/10 des Faserdurchmessers, enthält, wobei die Menge von SiC-Pulver in dem Bad derart ist, daß dieses Pulver 5 bis 30 Gew.-% der verdichteten Vorform darstellt,
(B) - eine faserige Vorform des Teils allein aus dieser imprägnierten Kohlenstoffaser herzustellen,
(c) - das Harz der gefüllten Vorform zu polymerisieren und es dann zu pyrolysieren, um es in Kohlenstoff umzuwandeln, und so die gefüllte Vorform zu verdichten.

14. Verfahren nach Anspruch 12 oder 13, dadurch gekennzeichnet, daß es darüber hinaus mindestens einen Zyklus der zusätzlichen Verdichtung mit Kohlenstoff enthält.

15. Verfahren nach Anspruch 14, dadurch gekennzeichnet, daß der Zyklus der zusätzlichen Verdichtung darin besteht, die mit SiC und Kohlenstoff gefüllte Vorform mit einem Harz, das ein Kohlenstoffvorläufer ist, zu imprägnieren, dieses Harz zu polymerisieren und es dann zu pyrolysieren.

16. Verfahren nach Anspruch 14, dadurch gekennzeichnet, daß der Zyklus der zusätzlichen Verdichtung darin besteht, die mit SiC und Kohlenstoff gefüllte Vorform mit Teer zu imprägnieren oder eine chemische Abscheidung von Kohlenstoff in der Dampfphase auszuführen.

17. Verfahren nach einem der Ansprüche 12 bis 16, dadurch gekennzeichnet, daß die Imprägnierung mit dem mit SiC gefüllten Harz in Gegenwart eines Lösungsmittels ausgeführt wird, das die Viskosität der Mischung herabsetzt.

18. Verfahren nach einem der Ansprüche 12 bis 17, dadurch gekennzeichnet, daß das Imprägnierungsbad auf 100 Gewichtsteile Harz 10 bis 100 Gewichtsteile SiC-Pulver und 0 bis 10 Gewichtsteile Losungsmittel enthält.

19. Verfahren nach einem der Ansprüche 12 bis 18, dadurch gekennzeichnet, daß man auf der äußeren Oberfläche des Teils mindestens eine äußere Schicht von Keramik abscheidet.

20. Verfahren zum Schutz eines Verbundmaterials aus Kohlenstoffasern (4), die untereinander durch eine Kohlenstoffmatrix (6) verbunden sind, vor Oxidation in Gegenwart eines gasförmigen oxidierenden Materiestroms (12) bei Temperaturen von 1000°C bis 1700°C, darin bestehend, in der Matrix durch Umwandlung eines hochfeinen Pulvers (10) von kristallinem SiC, das in den Poren (7, 8) der Matrix im Anteil von 5 bis 30 Gew.-% der Gesamtheit von Fasern, Matrix und Pulver angeordnet ist, eine Sperre für die Gasdiffusion (14) aus porösem SiO₂ auszubilden.

21. Verfahren nach Anspruch 20, dadurch gekennzeichnet, daß das Pulver eine Korngröße kleiner als 1/10 des Faserdurchmessers hat.

22. Verfahren nach Anspruch 20 oder 21, dadurch gekennzeichnet, daß die Anordnung aus Fasern und Matrix mit mindestens einer äußeren Schicht (30, 32) von Keramik bedeckt wird.

23. Verfahren nach Anspruch 22, dadurch gekennzeichnet, daß die äußere Schicht eine Schicht von Siliciumcarbid (30) ist.

24. Verfahren nach Anspruch 23, dadurch gekennzeichnet, daß die Schicht von Siliciumcarbid (30) mit einer letzten Schicht von hitzebeständigem Oxid (36) bedeckt wird.

25. Verfahren nach Anspruch 22, dadurch gekennzeichnet, daß die äußere Schicht eine Schicht von hitzebeständigem Oxid (32) ist.

26. Verfahren nach Anspruch 24 oder 25, dadurch gekennzeichnet, daß zwischen der Oxidschicht (32) und dem darunterliegenden Material (30, 6) eine Zwischenschicht als Reaktionssperre vorgesehen ist.

27. Verfahren nach einem der Ansprüche 20 bis 26, dadurch gekennzeichnet, daß der oxidierende Materiestrom ein Luftstrom ist.
